# EUROPÄISCHE PATENTANMELDUNG

(11) **EP 1 353 335 A1**
(43) Veröffentlichungstag der Anmeldung: **15.10.2003**
(21) Anmeldenummer: 02008435.6
(22) Anmeldetag: 13.04.2002
(51) Int. Cl.: G11B 27/00, G11B 27/10, G11B 20/00

(54) **Universeller Heim-Recorder**

(71) Anmelder: Lanzerath, Erhard, 61184 Burg Gräfenrode (DE)
(72) Erfinder: Lanzerath, Erhard, 61184 Burg Gräfenrode (DE)
(74) Vertreter: Helge, Reiner, Dipl.-Ing.

(57) **Zusammenfassung**

Die Anmeldung betrifft einen universellen Heim-Recorder zur Aufzeichnung und Wiedergabe von Audio- und /oder Videosignalen bzw. Daten im Bereich der Heimelektronik, mit dem auch bei integriertem Modem zu einem beliebigen Musiklieferanten und in Verbindung mit dem AES-standard das Problem von CD-Raubkopien gelöst werden kann. Der universeller Heim-Recorder als Aufzeichnungs- und Wiedergabegerät besteht aus in einem Gehäuse angeordneten, mindestens einer Magnetplatte, einer Hauptplatine für die Programmsteuerung der angeschlossenen Komponenten, Analog-/Digital- und Digital/Analog-Wandler, Bedienelemente, einem Minidisplay sowie einer alphanumerischen Tastatur mit den Funktionen der Aufnahme, Wiedergabe und Löschen, textlichen Beschreibung, Darstellung auf dem Minidisplay und Auswahl in der nach Feldern sortierten Aufnahmeliste.

## Beschreibung

Die Erfindung betrifft einen universellen Heim-Recorder zur Aufzeichnung und Wiedergabe von Audio- und/oder Videosignalen bzw. Daten im Bereich der Heimelektronik, mit dem auch bei integriertem Modem zu einem beliebigen Musiklieferanten und in Verbindung mit dem AES-Standard das Problem von CD-Raubkopien gelöst werden kann.

Bekannt sind Aufzeichnungsgeräte, wie zum Beispiel Tonbandgeräte oder Kassettenrekorder, bei denen akustische (Audio-) Daten auf ein Magnetband aufgezeichnet werden. Weiterhin sind Geräte bekannt, bei denen als Datenträger Schallplatten oder CD's verwendet werden.

Diese haben den Nachteil, daß bei diesen Tonträgern eine geordnete Anzeige von Titeln, Interpret, Komponist etc., die auf diesen gespeichert sind, nicht möglich ist. Eine Sammlung solcher Tonträger ist äußerst unübersichtlich. Auch ist ihre Speicherkapazität sehr gering.
Es gibt weiterhin Computerlösungen für Funkhäuser, wobei die Musikstücke auf Magnetplatten digital aufgezeichnet werden und nach entsprechender Auswahl gesendet werden können.

Mit Standardbetriebssystemen können keine sehr langen Aufnahmen datenträgerübergreifend gemacht werden. PCs haben zudem eine gewisse Geräuschentwicklung.

Des weiteren können mittels Suchmaschinen im Internet MP3-komprimierte Musikstücke aufgefunden und zum Anfragesteller weitergeleitet werden.
Dies bedingt aber aufwendige technische Voraussetzungen, wie Personalcomputer, Internetanschluß etc.

Aus der DE 299 01 042 U1 ist eine Wiedergabeeinrichtung zum wahlfreien Abspielen von auf magnetischen oder optischen Tonträgern aufgezeichneten Audio und/oder Videobeiträgen bekannt, wobei diesen jeweils ein Titel und eine Anfangsadresse zugeordnet sind. Die Wiedergabeeinrichtung weist die Merkmale Bedienfeld mit mindestens zwei gleichen Sätzen von Bedienelementen, die an eine parallele oder serielle Schnittstelle eines Computers angeschlossen sind, ein Wiedergabedisplay und mindestens eine Festplatte zur Aufzeichnung von komponierten Titeln, Beiträgen oder deren Anfangsadressen auf. Bei der Wiedergabeeinrichtung handelt es sich um einen universellen PC, der mit einem Bedienfeld und einem Display (Bildschirm) verbunden ist, wobei das Bedienfeld mindestens zwei gleiche Sätze von Bedienelementen aufweist. Jeweils ein Satz Bedienelemente dient für die Widergabe/Anzeige des laufenden Stückes, während der andere Satz zur Vorauswahl weiterer Stücke dient. Es ist somit erkennbar, daß die vorbeschriebene Erfindung auf eine technische Optimierung der Wiedergabe durch rasches Weiterschalten von Stücken, wie es beispielsweise in Diskotheken benötigt wird, ausgerichtet ist. Da auch bezug auf eine parallele oder serielle Schnittstelle eines Computers und die Kompression der Audiodaten im MPEG 3-Format genommen wird, ist davon auszugehen, daß hier ein Betriebssystem, beispielsweise Windows oder Unix, als Basis für Spezialprogramme, beispielsweise MP3, zugrunde liegt.
Die vorbeschriebenen Lösungen sind nun nicht unbedingt für das heimische Wohnzimmer geeignet.
Für die Aufzeichnung und Wiedergabe von Videodaten sind Videorecorder (VHS) oder DVD-Player bekannt. Diese haben den Nachteil, daß eine geordnete Anzeige von Titeln, Regisseuren etc., die auf den Videokassetten oder DVD's gespeichert sind, nicht möglich sind. Eine Sammlung solcher Datenträger ist äußerst unübersichtlich, auch ist ihre Speicherkapazität begrenzt.

Weiterhin sind in diesem Bereich Geräte bekannt, die als Speichermedium eine Hard Disc verwenden. Die Hard Disc hat oft nur den Zweck der Zwischenspeicherung bzw. zur Nachbearbeitung. Meist wird über einen längeren Zeitraum ein laufender Mitschnitt aufgezeichnet, aus dem nachträglich der interessierende Ausschnitt gewählt werden kann.
Für eine Archivierung sind diese Geräte nicht geeignet, da zu wenig Speicherplatz zur Verfügung steht. Meist wird in der Anleitung zu diesen Geräten darauf verwiesen, daß die Archivierung auf anderen Geräten vorzunehmen ist.
Als Beschreibung einer Aufnahme werden durchweg feste Vorgaben, die von den neueren CD's entnommen werden, vom Internet (CD-Datenbank) entnommen. Bei Fernsehprogrammen wird vom Satelliten ASTRA des nachts für Beschreibungszwecke automatisch die Programmvorschau für 14 Tage entnommen. An Daten stehen für eine Beschreibung z.B. der Aufnahmetag, die Zeit, der Senderkanal und der Name zur Verfügung. Eine individuelle Änderung ist mit den bekannten Geräten nicht möglich. Einige Hersteller bieten für die Verwaltung (Beschreibung, Filmschnitt u.ä.) einen PC-Anschluß an, oder es werden per Joystick Buchstaben nacheinander aus einer optisch dargestellten Liste ausgewählt und so ein Beschreibungstext produziert, was sehr aufwendig ist, wenn eine große Anzahl von Beschreibungstexten eingegeben werden soll. Hier ist eine starre Fremdbeschreibung Standard.

Ein Auswahlverfahren, das auf einer großen Anzahl von aufgezeichneten Audio- und/oder Videostücken beruht, ist nicht möglich, da die vorbekannten Recorder nicht für große Datenmengen sondern für vielfältige Anwendungen entwickelt wurden, z.B. Anschluß von Camcodern, Bildschnitt u. ä..

Die Erfindung stellt sich daher die Aufgabe, einen neuartigen universellen Heim-Recorder als Aufzeichnungs- und Wiedergabegerät, vorzugsweise im Bereich der Heimelektronik, zu schaffen, mit dem analoge Audio- und/oder Videosignale bzw. Daten digital aufgezeichnet, verwaltet und wiedergegeben werden können und zwar für das Gerät bedienende Personen ohne spezielle PC-Kenntnisse.

Erfindungsgemäß wird die Aufgabe dadurch gelöst, daß der universelle Heim-Recorder als Aufzeichnungs- und Wiedergabegerät aus in einem Gehäuse angeordneten Aufzeichnungsspeicher, einer programmierbaren Hauptplatine, Audio- bzw. Video-Codec, Bedienelemente, einem Minidisplay sowie einer alphanumerischen Tastatur besteht.

Die Bedienelemente werden in allgemeine und Sonderbedienelemente unterteilt. Die Sonderbedienelemente decken die Funktionen "Auswahl", "Sortierung nach Feldbezeichnung", "Aufnahme-, Wiedergabe-, Kopier- und Löschfunktion " sowie "Graphikausgabe" und "Markierung von Ausschnitten" ab.
Der Aufzeichnungsspeicher besteht aus mindestens einer Magnetplatte.

Die Hauptplatine besteht vorzugsweise aus einer Basisplatine mit Chip's bzw. Software für Audio- und/oder Videosignalbearbeitung und dient der Verwaltung der Daten auf der/den Magnetplatte(n) und der Steuerung, der Daten zum Minidisplay sowie der Tastatur und der Bedienelemente.

Der erfindungsgemäße universelle Heim-Recorder verwendet zur Aufzeichnung von Audio- und/oder Videodaten ein oder mehrere Magnetplatten und zeichnet ein Werk in mehreren Blöcken, die untereinander, gegebenenfalls auch hierarchisch, vor- und rückverkettet sind, auf. Freiwerdende Bereiche werden in ähnlichen Ketten verwaltet.

Jede Aufnahme wird mit einem Text per Formular und alphanumerischer Tastatur beschrieben, wobei individuelle Formulare und Beschreibungstexte auf dem Minidisplay angezeigt werden. Hier zeigt sich der Vorteil einer alphanumerischen Tastatur für die individuelle Texteingabe, die ein integraler Bestandteil des Heim-Recorders und somit der Erfindung ist.
Die Formularfelder und Beschreibungstexte können vom Bediener individuell gestaltet werden.

Über das Minidisplay hat man einen vollständigen Überblick über alle aufgezeichneten Daten, und die Auswahl per Tastendruck ist so einfach, wie beispielweise die Bedienung eines CD-Rekorders, was insbesondere durch Sortierung der zur Auswahl gestellten Beschreibungen erreicht wird. Dadurch wird ein mehrstufiges Auswahlverfahren realisiert. Die Auswahl erfolgt vor Wiedergabe per Minidisplay. Die Vor- bzw. Rücktasten sind aufgrund sehr großer Datenmengen mehrstufig ausgeführt.

Dabei kommt der universelle Heim-Recorder im Gegensatz zu den Personalcomputern ohne ein Standart-Betriebssystem und ohne Mausbedienung aus. Auch wird kein großer Bildschirm mit der weit verbreiteten WINDOWS - Technik benötigt. Vielmehr werden alle Funktionen auf elementare Tastendrucke (durch die Sonderbedienelemente) zurückgeführt.

Der Vorteil bei diesem universellen Heimrecorder liegt darin, daß nicht nur von CD's sondern auch z.B. von Schallplatten und Tonbändern aufgenommen werden kann. Desweiteren wird durch die Verkettung und Beschreibung in dem Werk selbst eine hohe Sicherheit der aufgezeichneten Daten erreicht und Speicherplattenfehler im Zentralregister führen nicht zum Verlust aller Daten.

Anhand von Ausführungsbeispielen soll die Erfindung näher beschrieben werden.

Der erfindungsgemäße universelle Heim-Recorder kann so ausgebildet werden, daß zum einen nur Audiosignale bzw. Daten und zum anderen nur Videosignale bzw. Daten aufgezeichnet, verwaltet und wiedergegeben werden können. Im weiteren ist es auch möglich beides in einem Heimrecorder zu vereinen, so daß sowohl Audiosignale bzw. Daten als auch Videosignale bzw. Daten aufgezeichnet, verwaltet und wiedergegeben werden können.

In einem ersten Ausführungsbeispiel wird der universelle Heim-Recorder als Aufzeichnungs- und Wiedergabegerät für Audiodaten beschrieben. Dieser besteht aus einer in einem Gehäuse angeordneten Magnetplatte, vorzugsweise einer Hard Disc, mit einer erheblichen Aufnahmekapazität als Aufzeichnungs- und Arbeitsspeicher und einer Basisplatine für die Programmsteuerung. Analog/Digital- und Digital/Analog-Wandler, gegebenenfalls ein MP3-Codec, ein Minidisplay für die Text- und Graphikdarstellung, Bedienelemente sind im Gehäuse integriert. Eine alphanumerische Tastatur ist angeschlossen.

Die Basisplatine dient der Programmierung der benötigten Funktionen, wie der Verwaltung der Daten auf dem Aufzeichnungsspeicher, der Steuerung der Digital/Analog- und Analog/Digital-Wandler, des Minidisplays, der Bedienelemente sowie der Tastatur.
Die Eingangsspannungen ein oder mehrerer Kanäle und ggf. nach Vorverstärker, z. B. beim Mikrofoneingang, werden digital in eine feste Anzahl von Bits, z. B. 16 je Kanal, umgewandelt, gegebenenfalls durch einen MP3-Codec auch komprimiert. Diese Daten werden auf die Magnetplatte aufgezeichnet. Umgekehrt werden die Daten von der Platte gelesen, analog zurückgewandelt und gegebenenfalls dekomprimiert sowie auf einen oder mehrere Ausgänge mit oder ohne Verstärker, z. B. für Lautsprecher, gelegt.

Bei mehreren Platten werden lange Tonaufzeichnungen ggf. auch plattenübergreifend gespeichert. Die maximale Dauer einer einzigen Aufnahme ist nur durch die Gesamtkapazität aller Platten begrenzt. Alle Textbeschreibungen der aufgezeichneten Werke stehen in einer Liste und zu dem auch in den primären Aufzeichnungsbereich. Zu jedem Werk ist in der Liste auch der Beginn auf der Platte in Form einer Plattennummer und der LBA (logical block adress) vermerkt. Einzelne Bereiche, in denen Teile eines Werkes gespeichert sind, werden miteinander durch die Plattennummer und die LBA verkettet. So zeigt jeder Teil eines Werkes (Ca. 32 KB) auf den vorausgegangenen und nachfolgenden, auch wenn dieser auf einer anderen Platte steht. Beim Löschen eines Werkes werden alle von diesem belegten Bereiche in eine Freibereichskette eingeordnet und bei neuen Aufnahmen wiederverwendet.

Als kleines Anzeigegerät für die Text- und Graphikdarstellung ist ein Minidisplay vorgesehen.
Dieses Anzeigegerät gibt eine Übersicht aufgenommener Werke aus oder beschreibt das gerade Aufgenommene oder Wiedergegebene. Auch können Hilfstexte mit Bedienhinweisen angezeigt sowie gleichzeitig akustisch wiedergegeben werden.
Ein Werk wird in Feldern beschrieben, die einen Namen haben. So wird z. B. "Beethoven" in das Feld "Komponist" eingetragen. Ebenso werden, wenn dies der Anwender wünscht, weitere Felder für Eintragungen angeboten, z. B. "Werkname", "Sänger", "Chor", oder der Anwender kann die Felder selbst individuell gestalten.

Auch für private Aufzeichnungen oder etwa Tieraufnahmen werden entsprechende Felder bei Bedarf angeboten.

Falls das Minidisplay auch Graphiken darstellen kann, wird die Spannungskurve analoger Eingänge angezeigt.

Für allgemein notwendige Funktionen, wie z. B. Aufnahme, Wiedergabe, laut/leise, ein/aus werden Bedienelemente in Form von Schieber, Taster, Schalter oder Drehknöpfe eingesetzt.

Sonderbedienelemente steuern die Funktionen: "Auswahl von Werken, Sortierung nach Feldbezeichnungen, Graphikausgabe oder Kopier- /Löschfunktion".
Mit dem Sonderbedienelement - Auswahl von Werken - wird mit der Funktion "vor" oder "zurück" aus einer Liste aller aufgenommenen Werke eines eingestellt, das dann durch bloßes Drücken der Wiedergabetaste erklingt oder auch mit einem Sonderbedienelement gelöscht werden kann. Steigt der Einstellaufwand durch die große Zahl der Werke an, so kann er durch eine Vorauswahl von Anfangsbuchstaben verringert werden. Das Auswahlverfahren umfaßt vier Stufen
- Auswahl der Werkart, falls eine andere als die aktuell angezeigte Art gewünscht,
- Auswahl der Felder für die Sortierung, falls eine andere als die aktuell angezeigte gewünscht wird,
- Auswahl nach Wortanfängen (aber nur bei sehr vielen Einträgen innerhalb einer Werkart),
- Serielles Einstellen eines gewünschten Werkes.

Hierbei können meist die ersten drei Stufen entfallen.

Ein Eintrag in einem Formular besteht aus einer Feldbezeichnung und danach einem beliebig langen freien oder vorbelegten Feld für die Eintragung. Ein Formular hat ein oder mehrere solcher Eintragungen (Feldbezeichnung und Freibereich).

Mit einem Sonderbedienelement kann die graphische Darstellung der analogen Eingangsspannungen ein- oder ausgeschaltet werden.

In dieser Graphik wird mit einer graphischen Anfangs- und Ende-Marke ein Ausschnitt eines aufgenommenen Werkes eingestellt. Dieser Ausschnitt kann dann bei Drücken der Entsprechenden Tasten wiedergegeben, gelöscht oder Kopiert werden.

Da die kopierten Teile wieder wie alle anderen Aufnahmen eingetragen werden, kann man vergleichendes Hören, z. B. der gleichen Arie verschiedener Sänger, durchführen.

Eine Tastatur mit alphabetischen Tasten und Ziffern, also eine alphanumerische Tastatur ggf. auch ohne Sondertasten z. B. F1 bis F12, wie bei PC-Tastaturen üblich, dient der Beschreibung aufgenommener Werke.

Bei der Eingabe von Zeichen prüft der universell Heim-Rekorder, ob in ein Feld mit Schreibunterstützung eingegeben wird oder nicht. Einem Feld kann eine Liste mit möglichen Einträgen zugeordnet werden, z. B. wird dem Feld "Komponist" eine Liste aller bekannter Komponisten zugeordnet, die auf Magnetplatte gespeichert ist.
Schon zu Beginn der ersten eingegebenen Buchstaben, etwa "Bee" kann nun der Rekorder "thoven" ergänzen. Diese Schreibunterstützung kann für beliebige Felder eingerichtet sein.

Mit Hilfe des erfindungsgemäßen universellen Heim-Recorders kann in Verbindung mit dem AES-Standard das Problem von CD-Raubkopien gelöst werden kann. Bei dem Verfahren, das mit der neuen Cryptonorm AES (Advanced Encryption Standard) arbeitet, sind die Daten verschlüsselt und können nur vom berechtigten Empfänger entschlüsselt und abgespielt werden. Beispielsweise können alle Werke, die in den letzten Monaten häufig verkauft werden, auf eine DVD so geschrieben werden, daß jedes mit einem eigenen AES-Schlüssel, der nur dem Hersteller bekannt ist, codiert wird. Die Schlüssel sind dann für jedes Werk vom Hersteller abrufbar. Die neue DVD-Norm mit 27 GB, die blue-ray-disc, faßt mehrere Hundert solcher Werke. Will nun jemand ein oder mehrere Werke kaufen, leihen oder n-mal hören, so wird ihm die entsprechende DVD zugesandt und es wird ein Paßwort vereinbart, daß der Kunde frei wählen kann. Nach Bezahlung legt er die DVD in das Laufwerk des universellen Heim-Recorders. Das Gerät baut nun automatisch eine einfache Modemverbindung zum Produzenten der DVD auf. Es fragt den Kunden nach seinem Paßwort und holt vom Hersteller ein Entschlüsselungsprogramm, welches mit dem Kundenpaßwort ablauffähig decodiert wird. Das Programm ist ein AES-Decodierer. Es kennt die vom Kunden bestellten Werke und deren Herstellerverschlüsselung und leitet nun das Kopieren der Werke auf den universellen Heim-Recorder ein. Dies geschieht mit vielfacher Geschwindigkeit gegenüber dem Abspielen, weil die Daten über eine digitale Schnittstelle vom DVD zum Recorder übertragen werden. Nun können die einzelnen Werkbeschreibungen von der DVD übernommen oder individuell verändert werden, und erst jetzt kann man sich das Werk anhören, bzw. den Film ansehen. Das Entschlüsselungsprogramm ist nur einige hundert Byte lang. Somit dauert die Übertragung per einfacher Modemverbindung auch nur wenige Sekunden. Die Übertragung kompletter Werke verbietet sich wegen der Zeit und der Kosten von selbst. Diese Verfahren ermöglicht es dem Hersteller, daß er das empfangene Gerät (Nummer, Kundendaten) überprüft und die Decodierung verweigert, falls die DVD auf einem fremden Gerät eingelegt wurde oder die Paßworte nicht korrekt sind. Ein "Aushorchen ist unmöglich, weil die Verbindung nur das Decodierprogramm überträgt. Der universelle Heim-Recorder ist so ausgelegt, daß keinerlei Datenträger bespielt werden können, bzw. er hat keinen digitalen Ausgang, wie bei Soundkarten. Werden analoge Daten von lineout mit einem anderen Gerät auf eine CD gebracht, so hätte man die gleiche Situation, wie bei einem CD-Player: stark verlangsamte und deshalb abschreckende Kopiervorgänge ohne nennenswerten Qualitätsverlust. Werden im universellen Heim-Recorder jedoch in den analogen Ausgangsignalen gerätespezifische unhörbare "Marken" eingebaut, so kann man feststellen, von welchen Gerät unerlaubt kopiert wurde und woher das Werk ursprünglich kam. Das ist für die Hersteller interessant, insbesondere für den Fall des illegalen Massenvertriebs.
Der universelle Heim-Recorder bietet somit einen idealen Kopierschutz mit nur wenigen zusätzlichen Komponenten, einem Laufwerk für die DVD, einem Modem und einer erweiterten Software.

In einem zweiten Ausführungsbeispiel wird der universelle Heim-Recorder als Aufzeichnungs- und Wiedergabegerät für Videodaten beschrieben. Dieser besteht aus einem Gehäuse, mit einigen zusätzlichen Funktionstasten für Aufnahme, Stop, Wiedergabe usw., einem Minidisplay, einer alphanumerischen Tastatur, Hard Disc's für die Aufzeichnung digitalisierter Signale (Ton/Bild) und einer Basisplatine mit Steuerprogramm. Im Gehäuse sind selbstverständlich auch ein Reciver und ein entsprechender Kanalwähler untergebracht. Das funktionale Zusammenspiel der Komponenten wurde bereits im vorangehenden Ausführungsbeispiel beschrieben.

Die Basisplatine dient der Programmierung der benötigten Funktionen, wie der Verwaltung der Daten auf dem Aufzeichnungsspeicher, der Steuerung des Video-Codec's, des Minidisplays, der Bedienelemente sowie der Tastatur.
Bei mehreren Platten werden lange Videoaufzeichnungen ggf. auch plattenübergreifend gespeichert. Die maximale Dauer einer einzigen Aufnahme ist nur durch die Gesamtkapazität aller Platten begrenzt. Alle Textbeschreibungen der aufgezeichneten Werke stehen in einer Liste.
Als kleines Anzeigegerät für die Textdarstellung ist ein Minidisplay vorgesehen.
Dieses Anzeigegerät gibt eine Übersicht aufgenommener Werke aus oder beschreibt das gerade Aufgenommene oder Wiedergegebene.
Ein Werk wird in Feldern beschrieben, die einen Namen haben. So wird z. B. "Spielberg" in das Feld "Regisseur" eingetragen. Ebenso werden, wenn dies der Anwender wünscht, weitere Felder für Eintragungen angeboten, z. B. "Name des Films/Werkname", "Schauspieler", usw..

Die Beschreibung eines Werkes sowie die Auswahl für die Wiedergabe erfolgt analog dem zuvor beschriebenen Ausführungsbeispiel.

## Patentansprüche

1. Universeller Heim-Recorder als Aufzeichnungs- und Wiedergabegerät, vorzugsweise im Bereich der Heimelektronik, mit einem Aufzeichnungsspeicher für Audio und/oder Videosignale bzw. Daten,
**dadurch gekennzeichnet, daß**
es aus mindestens einer Magnetplatte als Aufzeichnungsspeicher, einer programmierbaren Hauptplatine, einer alphanumerischen Tastatur an ihrer Schnittstelle, einem Minidisplay mit Bedienelementen an ihrer Parallel- oder Serienschnittstelle besteht, mit den Funktionen der Aufnahme, Wiedergabe und des Löschens sowie mit Verkettung, der textlichen Beschreibung durch den Anwender über die alphanumerische Tastatur per Formular auf dem Minidisplay, welches je nach Art des Werkes unterschiedlich gestaltet ist, und der mehrstufigen Auswahl über die Bedienelemente zur Wiedergabe einer Aufnahme mit Auswahl per Formular, nach Art des Werkes, Auswahl des Sortierfeldes, Auswahl von Gruppen nach Anfangszeichen und Einzelauswahl.

2. Universeller Heim-Recorder nach Anspruch 1,
**dadurch gekennzeichnet, daß**
die Bedienelemente in allgemeine und Sonderbedienelemente unterteilt sind, wobei mittels der Sonderbedienelemente die komplexen Funktionen -Auswahl eines Werkes, Sortierung nach Feldbezeichnung, Graphikausgabe, Markierung von Ausschnitten sowie Kopier- und Löschfunktion - steuerbar sind.

3. Universeller Heim-Recorder nach Anspruch 1 und 2,
**dadurch gekennzeichnet, daß**
die Hauptplatine vorzugsweise aus einer universell programmierbaren Basisplatine mit einem integrierten Codec für Audio- und Videosignale besteht.

4. Universeller Heim-Recorder nach Anspruch 1 bis 3,
**dadurch gekennzeichnet, daß**
bei Aufzeichnung eines in mehreren Blöcken unterteilten Werkes auf eine oder mehrere Magnetplatten diese Blöcke untereinander vor- und rückverkettet sind.

5. Universeller Heim-Recorder nach Anspruch 1 bis 4,
**dadurch gekennzeichnet, daß**
die Bedienelemente als Schieber, Taster, Schalter und/oder Drehknöpfe ausgebildet sind.

6. Universeller Heim-Recorder nach Anspruch 1 bis 5,
**dadurch gekennzeichnet, daß**
im Gehäuse des Recorders ein DVD-Laufwerk und ein Modem integriert sein kann.

7. Universeller Heim-Recorder nach Anspruch 1 bis 5,
**dadurch gekennzeichnet, daß**
bei Aufzeichnung und Wiedergabe von Videosignalen bzw.Daten im Gehäuse ein Reciver und ein Kanalwähler integriert sind
